# EUROPÄISCHE PATENTSCHRIFT

(11) **EP 1 179 154 B1**
(45) Veröffentlichungstag und Bekanntmachung des Hinweises auf die Patenterteilung: **13.04.2005**
(21) Anmeldenummer: 00993279.9
(22) Anmeldetag: 29.11.2000
(51) Int. Cl.: F16L 19/028

(54) **ROHRVERBINDUNG UND VERFAHREN ZU IHRER HERSTELLUNG**
PIPE CONNECTOR AND METHOD FOR PRODUCTION THEREOF
RACCORD DE TUYAU ET SON PROCEDE DE REALISATION

(30) Priorität: 30.11.1999 DE 19958475
(43) Veröffentlichungstag der Anmeldung: 13.02.2002
(73) Patentinhaber: Parker Hannifin GmbH, 33659 Bielefeld (DE)
(72) Erfinder: EHRKE, Dieter, 33649 Bielefeld (DE)
(74) Vertreter: Müller, Karl-Ernst, Dr., Dipl.-Ing.
(86) Internationale Anmeldenummer: PCT/DE2000/004304
(87) Internationale Veröffentlichungsnummer: WO 2001/040693

(56) Entgegenhaltungen:
- DE-A- 19 520 099
- DE-C- 19 742 917
- FR-A- 624 097
- US-A- 4 688 312
- US-A- 5 893 591
- PATENT ABSTRACTS OF JAPAN vol. 012, no. 416 (M-759), 4. November 1988 (1988-11-04) & JP 63 154240 A (TOYOTA MOTOR CORP), 27. Juni 1988 (1988-06-27)

## Beschreibung

Die Erfindung betrifft eine Rohrverbindung für eine druck- und ausreißfeste sowie formschlüssige Hochdruckverschraubung mit einem umgeformten Rohr, einem Verschraubungskörper oder Verbindungsstutzen mit einem Konus, dem sich eine achsparallele Bohrung mit einer radialen Endfläche als Rohrsitzboden für das in den Verschraubungskörper eingesteckte Rohr anschließt, mit einem Dichtring und mit einer das mit einer Wulst ausgebildete umgeformte Rohr übergreifenden und auf den Verschraubungskörper in montiertem Zustand aufgeschraubten Überwurfmutter, die an ihrem inneren Konus mit der Wulst des umgeformten Rohres eine zur Achse des Rohres geneigte Anlagefläche bildet, wobei die Wulst auf ihrer dem Verschraubungskörper zugewandten Seite eine radial zur Achse des Rohres ausgerichtete Anschlagfläche aufweist.

Eine derartige Rohrverbindung ist in der gattungsbildenden DE 195 20 099 A1 beschrieben. Bei der bekannten Rohrverbindung liegt die an dem Konus des Verschraubungskörpers ausgebildete Stirnfläche unmittelbar an der an der durch die Umformung des Rohres herbeigeführten wulstartigen Ausbauchung ausgebildeten, radial zur Rohrachse ausgerichteten Anschlagfläche der Wulst an. Soweit im montierten Zustand der Rohrverbindung die auf den Verschraubungskörper aufgeschraubte Überwurfmutter mit der an ihrem inneren Konus ausgebildeten Anlagefläche auf die dem Verschraubungskörper abgewandte Seite bzw. Fläche der Wulst drückt und dadurch das umgeformte Rohr in den Verschraubungskörper hineinzieht, ist damit der Nachteil verbunden, dass bei einem zu starken Anziehen der Überwurfmutter, insbesondere bei dünnwandigen Rohren, die Wulst mit den einerseits an dem Konus der Überwurfmutter und andererseits an dem Verschraubungskörper anliegenden Anlageflächen instabil und zusammengedrückt wird, was zur Folge hat, dass der zwischen den Anlageflächen der Rohrwulst befindliche Hohlraum kollabiert. Somit kann eine Verformung des Rohres mit einer Bauteilschädigung beispielsweise durch Reißen der Rohrwandung eintreten.

Eine Rohrverbindung mit einem anderen Aufbau ist in der DE 197 42 917 C1 beschrieben. Hierbei ist die Wulst an dem umgeformten Rohr als im wesentlichen symmetrischer Buckel mit nach beiden Seiten in Richtung der Rohrachse gleichmäßig zur Rohrachse geneigten Anlageflächen ausgebildet. Zwischen der buckelartigen Wulst und dem Verschraubungskörper ist ein Haltering angeordnet, der mit seiner dem Verschraubungskörper zugewandten radialen Stirnfläche unmittelbar an der Stirnfläche des Konus des Verschraubungskörpers anliegt. Die den Haltering übergreifende Überwurfmutter liegt ihrerseits mit einem Teilabschnitt ihrer inneren Anlagefläche des Konus gegen die zugeordnete Anlagefläche der buckelförmigen Wulst und mit einem weiteren Teilabschnitt unmittelbar gegen eine an dem Haltering korrespondierend angeordnete Fläche an, so dass der Haltering die von der Überwurfmutter in montiertem Zustand ausgeübte Kraft unmittelbar von der Überwurfmutter auf den Verschraubungskörper überträgt. Auf diese Weise nimmt die Wulst des umgeformten Rohres an einer Kraftübertragung kaum teil. Mit dieser Ausführungsform ist der Nachteil verbunden, dass die Ausbildung der buckelartigen Wulst an dem umgeformten Rohr mit hoher Genauigkeit erfolgen muß, weil ansonsten die unmittelbare Kraftübertragung zwischen Überwurfmutter und Verschraubungskörper über den Haltering beispielsweise durch eine vorherige Anlage von Haltering und/oder Überwurfmutter an einer ungenau gearbeiteten buckelartigen Wulst unterbrochen wird. In diesem Fall kommt es ebenfalls entweder zu einer unerwünschten Verformung der Wulst oder einem nachteiligen Spiel im Bereich der Rohrverbindung.

Der Erfindung liegt daher die Aufgabe zugrunde, eine gattungsgemäße Rohrverbindung derart weiterzubilden, dass in jedem Montagezustand eine sichere Rohrverbindung gegeben ist.

Die Lösung dieser Aufgabe ergibt sich aus dem Anspruch 1; vorteilhafte Ausgestaltungen und Weiterbildungen der Erfindung sind in den Unteransprüchen angegeben.

Die Erfindung sieht im einzelnen vor, dass zwischen einer Stirnfläche des Konus des Verschraubungskörpers und der Wulst des umgeformten Rohres ein von der Überwurfmutter übergriffener Haltering angeordnet ist, der sich bei montierter Rohrverbindung mit einer ersten Stirnfläche unmittelbar gegen die Anschlagfläche der Wulst und mit einer zweiten Stirnfläche unmittelbar gegen die Stirnfläche des Konus abstützt, und dass sich der Konus der Überwurfmutter bis zu ihrer Gewindebohrung erstreckt und der Haltering in montiertem Zustand mit seiner zum Konus der Überwurfmutter parallel laufenden Ringfläche zum Konus der Überwurfmutter einen Ringspalt bildet. Im Rahmen der erfindungsgemäßen Rohrverbindung ist die wulstartige Verformung des Rohres wieder in die Kraftübertragung einbezogen, indem nun über die radial ausgerichtete Anschlagfläche der Wulst die Kraft auf den Haltering und von hier aus unmittelbar auf den Verschraubungskörper übertragen wird. Der dabei gleichzeitig zwischen der Überwurfmutter und dem Haltering ausgebildete Ringspalt verhindert eine frühzeitige Anlage der Überwurfmutter an dem Haltering und stellt sicher, dass die von der Überwurfmutter ausgeübte Kraft ausschließlich über die in das Rohr eingeformte Wulst auf den Haltering übertragen wird.

Nach einem Ausführungsbeispiel der Erfindung ist vorgesehen, dass die Anschlagfläche der Wulst in die Außenwandung eines an die Wulst anschließenden achsparallelen Endstücks des Rohres unter Ausbildung einer zur Achse des Rohres geneigten Fläche einläuft und dass die der Rohrwulst zugekehrte, an die erste Stirnfläche anschließende Innenkontur des Halterings an der den Übergang von der Anschlagfläche in die Rohrwandung bildenden Fläche vollflächig anliegt. Hiermit ist der Vorteil verbunden, dass im Gegensatz zu der aus der DE 195 20 099 A1 bekannten Anordnung einer radial bis zur Rohrwandung verlaufenden Anschlagfläche an der Rohrwulst erfindungsgemäß nunmehr die entsprechende Anschlagfläche unter Ausbildung einer zur Achse des Rohres geneigten Fläche in die Rohrwandung einläuft, wobei der Haltering vollflächig auch an dieser Fläche der Rohrwulst anliegt. Damit ist auch diese Fläche zusätzlich in die Kraftübertragung zwischen Rohrwulst und Haltering einbezogen. Die besondere Ausbildung dieser Fläche an der Rohrwulst führt ferner dazu, dass im Bereich der radialen Anschlagfläche in der Rohrwulst kein Hohlraum entsteht, so dass der Kraftübertragungsweg zwischen Überwurfmutter und Verschraubungskörper jeweils über Vollmaterial-Bauteile gegeben ist.

Nach einem Ausführungsbeispiel der Erfindung setzt sich der Ringspalt zwischen Überwurfmutter und Haltering vorteilhaft bis über einen Teilbereich der zylindrischen Außenfläche des Haltesringes fort.

In einer vorteilhaften Weiterbildung weist der Haltering über einen Teil seiner zylindrischen Außenfläche eine Kunststoff- oder Elastomerbeschichtung auf, welche als Trägersubstanz für Noppen ausgebildet ist, die im montierten Zustand im Bereich des Innengewindes der Überwurfmutter liegen. Die Noppen greifen in dem Endbereich des Gewindes der Überwurfmutter ein, wodurch sichergestellt ist, dass der Haltering die Überwurfmutter auf dem Ende des Rohres während eines Transports dieser Teile zur Montagestelle unverlierbar zusammenhält, bis die Endmontage durch Einführung des Rohrendes in den Verschraubungskörper beginnen kann.

Nach einem Ausführungsbeispiel der Erfindung ist vorgesehen, dass im montiertem Zustand der Rohrbindung zwischen dem Konus des Verschraubungskörpers oder Verbindungsstutzen, dem achsparallelen Endstück des Rohres und einer Ringfläche des Halteringes eine Dichtkammer gebildet ist, in der der als Elastomerdichtung mit druckunterstützender Dichtwirkung ausgebildete Dichtring angeordnet ist, wobei in zweckmäßiger Weise vorgesehen sein kann, dass der Elastomerdichtring mit dem Haltering fest verbunden ist.

Die hervorragende Wirkung der erfindungsgemäßen Rohrverbindung kann dadurch verbessert werden, dass der Haltering eine höhere Festigkeit als das Rohrstück, als der Verschraubungskörper und als die Überwurfmutter aufweist, wobei diese höhere Festigkeit vorzugsweise durch eine Wärmebehandlung hergestellt werden kann.

Nach einem Ausführungsbeispiel der Erfindung ist vorgesehen, dass eine Stirnfläche des achsparallelen Endstückes des umgeformten Rohres mit dem Rohrsitzboden des Verschraubungskörpers im montierten Zustand der Verbindung eine Kontaktfläche bildet.

Gemäß einer weiteren Ausführungsform der Erfindung kann die metallische Dichtung dadurch hergestellt werden, dass eine Stirnfläche des achsparallelen Endstückes des umgeformten Rohres eine geschlossene Ringwulst aufweist, welche einen Bruchteil der Stirnfläche einnimmt und mit dem Rohrsitzboden des Verschraubungskörpers im montierten Zustand der Rohrbindung eine metallische Dichtung bildet.

Die Rohrverbindung gemäß der Erfindung ermöglicht die Verwendung genormter Bauteile, wie die Überwurfmutter, wobei mit der Wulst des umgeformten Rohres eine Anlagefläche mit einer Neigung von 45° zur Achse des Rohres gebildet wird.

In einer weiteren Ausführungsform der Erfindung schließt sich zur Absicherung gegen mechanische Schwingungen, welche über das Rohrsystem und damit auch über die Rohrverbindung laufen können, eine Stützhülse an die Rohrverformung unmittelbar an, welche im montierten Zustand durch die Überwurfmutter mit dem Rohr verklemmt ist.

In der Zeichnung ist ein Ausführungsbeispiel der Erfindung wiedergegeben, welches nachstehend beschrieben ist. Es zeigen:
- Fig. 1: einen Längsschnitt durch eine montierte Rohrverschraubung eines Ausführungsbeispiels gemäß der Erfindung;
- Fig. 2: einen Längsschnitt durch eine montierte Rohrverschraubung eines weiteren Ausführungsbeispiels mit einer Ringwulst auf der Stirnfläche des Rohrendes.

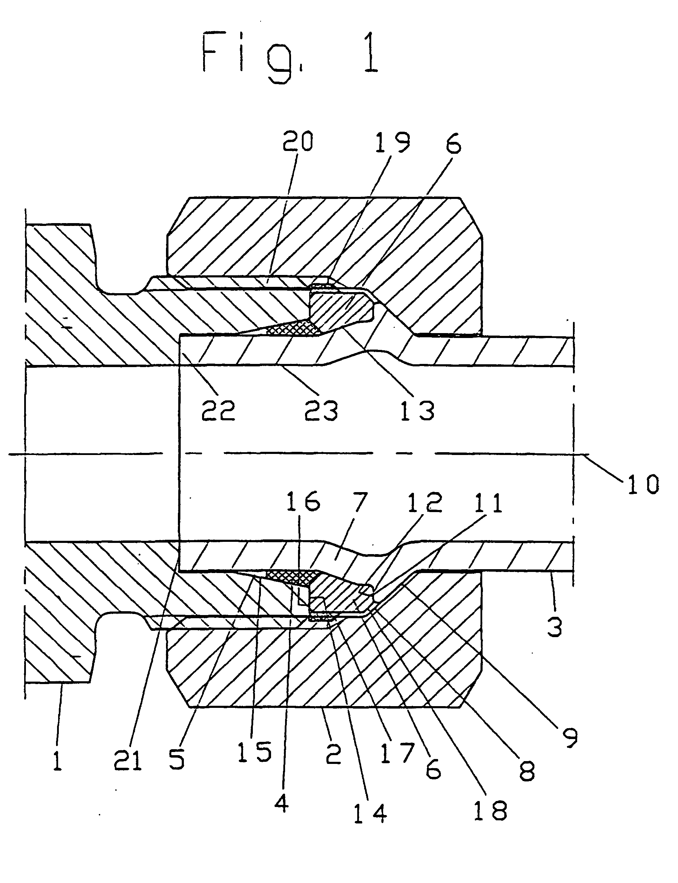

Das in Figur 1 dargestellte Verbindungssystem besteht aus einem Verschraubungskörper 1 mit seinem Konus 15, der in dem dargestellten Ausführungsbeispiel als genormter 24°-Konus ausgebildet ist, einer genormten Überwurfmutter 2, einem umgeformten Rohr 3 und einem Dichtring 4. Bei dem Dichtring handelt es sich vorzugsweise um ein Elastomer, d.h. um ein Polymer mit gummielastischen Eigenschaften, mit einem an die Dichtkammer 5 angepaßten Profil. Die Dichtkammer 5 wird begrenzt durch einen Teil des Rohres 3, einen Haltering 6 und den Konus 15 des Verschraubungskörpers 1. Die durch Umformung herbeigeführte Rohrwulst 7 weist eine spezifische Formgebung auf, wobei die Rohrwulst 7 mit dem Konus 8 der Überwurfmutter 2 eine Anlagefläche 9 bildet, die in eine im wesentlichen radial zur Rohrachse 10 gerichtete Anschlagfläche 11 für eine Stirnfläche 12 des Halteringes 6 übergeht.

Die Anschlagfläche 11 der Rohrwulst 7 zur Rohrachse 10 bildet vorzugsweise einen rechten Winkel, da ein solcher Winkel für die Übertragung der aufgebrachten Kräfte besonders vorteilhaft ist. Im Rahmen der Fertigungsgenauigkeit können auch geringe Abweichungen von einem derartigen rechten Winkel auftreten, ohne dass der Grundgedanke der Erfindung verlassen wird.

Die der Rohrwulst 7 zugekehrte Innenkontur 13 des Halteringes 6, welche von der Anschlagfläche 11 der Rohrwulst 7 bzw. der Stirnfläche des Halteringes 6 ausgeht, schließt sich direkt an die Stirnfläche 12 an und ist an die Rohrwulst angeformt.

Der Haltering 6 weist ferner eine radial verlaufende Ringfläche 14 auf, welche im montierten Zustand die Stirnfläche des Konus 15 des Verschraubungskörpers 1 kontaktiert und somit eine Blockmontage ermöglicht.

Die Überwurfmutter 2 kann einer DIN-Norm entsprechen und mit der Wulst 7 des umgeformten Rohres 3 eine Anlagefläche 9 mit einer Neigung von 45° zur Achse 10 des Rohres 3 bilden.

Der Konus 8 bzw. die zugeordnete Konusfläche der Überwurfmutter 2 erstreckt sich bis zu ihrer Gewindebohrung, wobei der Haltering 6 im montierten Zustand mit seiner zum Konus 8 der Überwurfmutter 2 parallel verlaufenden Ringfläche mit dem Konus 8 der Überwurfmutter einen Ringspalt 18 bildet. Der Ringspalt 18 zwischen der Überwurfmutter 2 und dem Haltering 6 erstreckt sich über einen Teilbereich seiner zylindrischen Außenfläche.

Der Haltering 6 weist in vorteilhafter Weise über einen Teil seiner zylindrischen Außenfläche eine Kunststoff- oder Elastomerbeschichtung 19 auf, welche als Trägersubstanz für Noppen ausgebildet ist, die im montierten Zustand im Bereich des Innengewindes 20 der Überwurfmutter 2 liegen. Mit dieser Noppenbeschichtung haftet der Haltering 6 während des Montagevorganges an der Mutter 2, so dass beide Bauelemente sich gegenseitig halten und sich von der Rohrwulst 7 nicht entfernen können.

In einem besonderen Ausführungsbeispiel ist der Elastomerdichtring 4 mit dem Haltering 6 fest verbunden, beispielsweise verklebt, so dass dadurch die Montage ebenfalls erleichtert wird.

In einem weiteren Ausführungsbeispiel bildet die Stirnfläche 22 des achsparallelen Endstückes 23 des umgeformten Rohres 3 mit dem Rohrsitzboden 21 des Verschraubungskörpers 1 im montierten Zustand der Rohrverbindung eine Kontaktfläche.

Nach einem Ausführungsbeispiel der Erfindung ist die Stirnfläche 22 des Rohrendstückes 23 oder ein radialer Teil derselben rolliert, so dass in Sonderfällen mit dem Rohrsitzboden 21 eine metallische Dichtung erzielt werden kann.

Die Rohrverbindung wird weiter dadurch verbessert, dass der Haltering 6 eine höhere Festigkeit als das Rohrstück 23 einschließlich der Rohrwulst 7, als der Verschraubungskörper 1 und als die Überwurfmutter 2 aufweist. Die vorgeschlagene höhere Festigkeit des Halteringes 6 wird vorzugsweise durch Wärmebehandlung des Halteringes erzielt.

Bei einem weiteren Ausführungsbeispiel der Erfindung ist eine in der Zeichnung nicht näher dargestellte Stützhülse vorgesehen, welche sich an die Rohrverformung unmittelbar anschließt und die durch die Überwurfmutter 2 mit dem Rohr 3 verklemmt ist. Hierdurch können Schwingungen, welche in das Rohrsystem gelangen, erheblich gedämpft werden, so dass diese in der Rohrverschraubung keine schädliche Auswirkung mehr ausüben können.

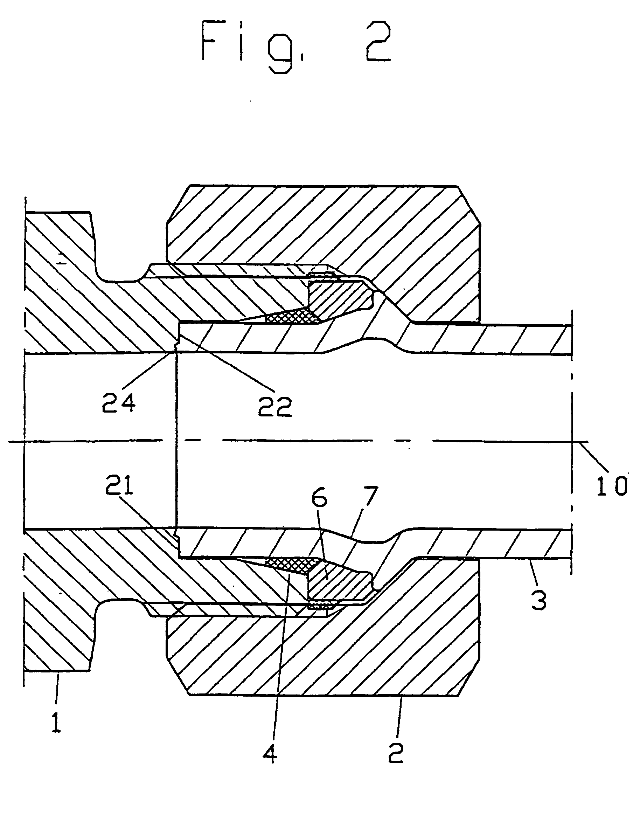

Die Fig. 2 zeigt die gleiche Darstellung einer Rohrverbindung wie Figur 1, jedoch in einer abgewandelten Ausführungsform. Die Stirnfläche 22 des achsparallelen Endstückes 23 des umgeformten Rohres 3 weist eine geschlossene Ringwulst 24 auf, welche einen Bruchteil der Stirnfläche 22 einnimmt und mit dem Rohrsitzboden 21 des Verschraubungskörpers 1 im montierten Zustand der Rohrverbindung eine metallische Dichtung bildet. Die Ringwulst 24 wird bei der Montage verpresst, so dass eine metallische Dichtung vorliegt.

## Patentansprüche

1. Rohrverbindung für eine druck- und ausreißfeste sowie formschlüssige Hochdruckverschraubung mit einem umgeformten Rohr (3), einem Verschraubungskörper (1) oder Verbindungsstutzen mit einem Konus (15), dem sich eine achsparallele Bohrung mit einer radialen Endfläche als Rohrsitzboden (21) für das in den Verschraubungskörper ( 1 ) eingesteckte Rohr (3) anschließt, mit einem Dichtring (4) und mit einer das mit einer Wulst (7) ausgebildete umgeformte Rohr (3) übergreifenden und auf den Verschraubungskörper (1) in montiertem Zustand aufgeschraubten Überwurfmutter (2), die an ihrem inneren Konus (8) mit der Wulst (7) des umgeformten Rohres (3) eine zur Achse (10) des Rohres (3) geneigte Anlagefläche (9) bildet, wobei die Wulst (7) auf ihrer dem Verschraubungskörper (1) zugewandten Seite eine radial zur Achse (10) des Rohres (3) ausgerichtete Anschlagfläche (11) aufweist, **dadurch gekennzeichnet, dass** zwischen einer Stirnfläche (16) des Konus (15) des Verschraubungskörpers (1) und der Wulst (7) des umgeformten Rohres (3) ein von der Überwurfmutter (2) übergriffener Haltering (6) angeordnet ist, der sich bei montierter Rohrverbindung mit einer ersten Stirnfläche (12) unmittelbar gegen die Anschlagfläche (11) der Wulst (7) und mit einer zweiten Stirnfläche (14) unmittelbar gegen die Stirnfläche (16) des Konus (15) abstützt, und dass sich der Konus (8) der Überwurfmutter (2) bis zu ihrer Gewindebohrung (17) erstreckt und der Haltering (6) in montiertem Zustand mit seiner zum Konus (8) der Überwurfmutter (2) parallel laufenden Ringfläche zum Konus (8) der Überwurfmutter (2) einen Ringspalt (18) bildet.

2. Rohrverbindung nach Anspruch 1, **dadurch gekennzeichnet, dass** die Anschlagfläche (11) der Wulst (7) in die Außenwandung eines an die Wulst (7) anschließenden achsparallelen Endstücks (23) des Rohres (3) unter Ausbildung einer zur Achse (10) des Rohres (3) geneigten Fläche einläuft und dass die der Rohrwulst (7) zugekehrte, an die erste Stirnfläche (12) anschließende Innenkontur (13) des Halterings (6) an der den Übergang von der Anschlagfläche (11) in die Rohrwandung bildenden Fläche vollflächig anliegt.

3. Rohrverbindung nach Anspruch 1 oder 2, **dadurch gekennzeichnet, dass** sich der Ringspalt (18) zwischen Überwurfmutter (2) und Haltering (6) bis über einen Teilbereich der zylindrischen Außenfläche des Halterings (6) fortsetzt.

4. Rohrverbindung nach einem der Ansprüche 1 bis 3, **dadurch gekennzeichnet, dass** der Haltering (6) über einen Teil seiner zylindrischen Außenfläche eine Kunststoff- oder Elastomerbeschichtung (19) aufweist, welche als Trägersubstanz für Noppen ausgebildet ist, die im montiertem Zustand im Bereich des Innengewindes der Überwurfmutter (2) liegen.

5. Rohrverbindung nach einem der Ansprüche 1 bis 4, **dadurch gekennzeichnet, dass** im montiertem Zustand der Rohrbindung zwischen dem Konus (15) des Verschraubungskörpers (1) oder Verbindungsstutzen, dem achsparallelen Endstück (23) des Rohres (3) und einer Ringfläche des Halteringes (6) eine Dichtkammer (5) gebildet ist, in der der als Elastomerdichtung mit druckunterstützender Dichtwirkung ausgebildete Dichtring (4) angeordnet ist.

6. Rohrverbindung nach Anspruch 5, **dadurch gekennzeichnet, dass** der Elastomerdichtring (4) mit dem Haltering (6) fest verbunden ist.

7. Rohrverbindung nach einem der Ansprüche 1 bis 6, **dadurch gekennzeichnet, dass** der Haltering (6) eine höhere Festigkeit als das Rohrstück, als der Verschraubungskörper (1) und als die Überwurfmutter (2) aufweist.

8. Rohrverbindung nach Anspruch 7, **dadurch gekennzeichnet, dass** die höhere Festigkeit des Halteringes (6) durch Wärmebehandlung hergestellt ist.

9. Rohrverbindung nach einem der Ansprüche 1 bis 8, **dadurch gekennzeichnet, dass** eine Stirnfläche (22) des achsparallelen Endstückes (23) des umgeformten Rohres (3) mit dem Rohrsitzboden (21) des Verschraubungskörpers (1) im montierten Zustand der Verbindung eine Kontaktfläche bildet.

10. Rohrverbindung nach einem der Ansprüche 1 bis 8, **dadurch gekennzeichnet, dass** eine Stirnfläche (22) des achsparallelen Endstückes (23) des umgeformten Rohres (3) eine geschlossene Ringwulst (24) aufweist, welche einen Bruchteil der Stirnfläche (22) einnimmt und mit dem Rohrsitzboden (21) des Verschraubungskörpers (1) im montierten Zustand der Rohrbindung eine metallische Dichtung bildet.

11. Rohrverbindung nach einem der Ansprüche 1 bis 10, **dadurch gekennzeichnet, dass** sich an die Wulst (7) des umgeformten Rohres (3) eine Stützhülse anschließt, welche durch die Überwurfmutter (2) mit dem Rohr (3) verklemmt ist.

## Claims

1. A pipe connection for a pressure-resistant and tearout-resistant and positively locking high-pressure screw joint comprising a deformed pipe (3), a screw body (1) or a connecting portion having a cone (15) adjoined by an axis-parallel bore having a radial end face as a pipe seat bottom (21) for the pipe (3) which is inserted into the screw body (1), a sealing ring (4), and a union nut (2) which engages over the deformed pipe (3) formed with a bead (7) and which in the assembled condition is screwed on to the screw body (1) and which at its inner cone (8), with the bead (7) of the deformed pipe (3), forms a contact surface (9) which is inclined with respect to the axis (10) of the pipe (3), wherein on its side that is towards the screw body (1) the bead has an abutment surface (11) which is oriented radially with respect to the axis (10) of the pipe (3), **characterised in that** arranged between an end face (16) of the cone (15) of the screw body (1) and the bead (7) of the deformed pipe (3) is a retaining ring (6) which has the union nut (2) engaging thereover and which in the assembled pipe connection bears with a first end face (12) directly against the abutment surface (11) of the bead (7) and with a second end face (14) directly against the end face (16) of the cone (15), and that the cone (8) of the union nut (2) extends as far as the screwthreaded bore (17) of the union nut and in the assembled condition, with its ring surface extending parallel to the cone (8) of the union nut (2), the retaining ring (6) forms an annular gap (18) relative to the cone (8) of the union nut (2).

2. A pipe connection according to claim 1 **characterised in that** the abutment surface (11) of the bead (7) runs into the outside wall of an axis-parallel end portion (23) of the pipe (3), that adjoins the bead (7), providing a surface which is inclined with respect to the axis (10) of the pipe (3), and that the inside contour (13) of the retaining ring (6), that is towards the pipe bead (7) and adjoins the first end face (12), bears over the full area against the surface forming the transition from the abutment surface (11) into the pipe wall.

3. A pipe connection according to claim 1 or claim 2 **characterised in that** the annular gap (18) between the union nut (2) and the retaining ring (6) extends to over a partial region of the cylindrical outside surface of the retaining ring (6).

4. A pipe connection according to one of claims 1 to 3 **characterised in that** over a part of its cylindrical outside surface the retaining ring (6) has a plastic or elastomer coating (19) which is in the form of a carrier substance for knobs which in the assembled condition are in the region of the female screwthread of the union nut (2).

5. A pipe connection according to one of claims 1 to 4 **characterised in that** in the assembled condition of the pipe connection a sealing chamber (5) is formed between the cone (15) of the screw body (1) or connecting portion, the axis-parallel end portion (23) of the pipe (3) and a ring surface of the retaining ring (6), the sealing ring (4) which is in the form of an elastomer seal with pressure-supporting sealing effect being arranged in the sealing chamber.

6. A pipe connection according to claim 5 **characterised in that** the elastomer sealing ring (4) is fixedly connected to the retaining ring (6).

7. A pipe connection according to one of claims 1 to 6 **characterised in that** the retaining ring (6) is of greater strength than the pipe portion, the screw body (1) and the union nut (2).

8. A pipe connection according to claim 7 **characterised in that** the greater strength of the retaining ring (6) is produced by heat treatment.

9. A pipe connection according to one of claims 1 to 8 **characterised in that** an end face (22) of the axis-parallel end portion (23) of the deformed pipe (3) forms a contact face with the pipe seat bottom (21) of the screw body (1) in the assembled condition of the connection.

10. A pipe connection according to one of claims 1 to 8 **characterised in that** an end face (22) of the axis-parallel end portion (23) of the deformed pipe (3) has a closed annular ridge (24) which occupies a fraction of the end face (22) and which forms a metallic seal with the pipe seat bottom (21) of the screw body (1) in the assembled condition of the pipe connection.

11. A pipe connection according to one of claims 1 to 10 **characterised in that** adjoining the bead (7) of the deformed pipe (3) is a support sleeve which is clamped to the pipe (3) by the union nut (2).

## Revendications

1. Raccord de tuyau pour une liaison vissée haute pression avec emboîtement, résistante à la pression et à l'arrachement, comportant un tuyau (3) moulé, un corps de vissage (1) ou une tubulure de liaison avec un cône (15) sur lequel se raccorde un perçage à axe parallèle comportant une surface d'extrémité radiale faisant office de fond d'assise (21) pour le tuyau (3) engagé dans le corps de vissage (1), avec une bague d'étanchéité (4), et avec un écrou-raccord (2) vissé après montage sur le corps de vissage (1) et enserrant le tuyau (3) moulé sur lequel est formé un renflement (7) et qui forme sur son cône (8) intérieur, avec le renflement (7) du tuyau (3) moulé, une surface d'appui (9) inclinée vers l'axe (10) du tuyau (3), le renflement (7) présentant sur son côté orienté vers le corps de vissage (1) une surface de butée (11) disposée radialement par rapport à l'axe (10) du tuyau (3), **caractérisé en ce qu'**il est placé, entre une surface frontale (16) du cône (15) du corps de vissage (1) et le renflement (7) du tuyau (3) moulé, une bague de maintien (6) enserrée par l' écrou-raccord ( 2) , qui, après montage du raccord de tuyau, s'appuie par une première surface frontale (12) directement contre la surface de butée (11) du renflement (7) et par une seconde surface frontale (14) directement contre la surface frontale (16) du cône (15), et **en ce que** le cône (8) de l'écrou-raccord (2) s'étend jusqu'au taraudage (17) de ce dernier et la bague de maintien (6) forme, après montage, avec sa surface annulaire au tracé parallèle au cône (8) de l'écrou-raccord (2), un interstice annulaire (18) vers le cône (8) de l'écrou-raccord (2).

2. Raccord de tuyau selon la revendication 1, **caractérisé en ce que** la surface de butée (11) du renflement (7) s'engage dans la paroi extérieure d'une pièce d'extrémité (23) du tuyau (3), laquelle est parallèle à l'axe (10) et prolonge le renflement (7), en formant une surface inclinée par rapport à l'axe (10) du tuyau (3) et **en ce que** le contour intérieur (13) de la bague de maintien (6), lequel est orienté vers le renflement (7) du tuyau et prolonge la première surface frontale (12), est totalement en contact avec la surface formant la transition de la surface de butée (11) vers la paroi du tuyau.

3. Raccord de tuyau selon la revendication 1 ou 2 **caractérisé en ce que** l'interstice annulaire (18) entre l'écrou-raccord (2) et la bague de maintien (6) se prolonge au-delà d'une zone partielle de la surface extérieure cylindrique de la bague de maintien (6).

4. Raccord de tuyau selon l'une des revendications 1 à 3 **caractérisé en ce que** la bague de maintien (6) présente sur une partie de sa surface extérieure cylindrique un revêtement (19) en matière plastique ou élastomère, lequel est conformé en substance porteuse pour des picots situés, après montage, au niveau du filet femelle de l'écrou-raccord (2).

5. Raccord de tuyau selon l'une des revendications 1 à 4, **caractérisé en ce que**, après montage du raccord de tuyau, une chambre d'étanchéité (5) est formée entre le cône (15) du corps de vissage (1) ou de la tubulure de liaison, la pièce d'extrémité (23), parallèle à l' axe, du tuyau (3) et une surface annulaire de la bague de maintien (6), dans laquelle est placée la bague d' étanchéité (4) conformée en tant qu'étanchéité élastomère avec un effet d'étanchéité assisté par pression.

6. Raccord de tuyau selon la revendication 5, **caractérisé en ce que** la bague d'étanchéité (4) en élastomère est fermement rattachée à la bague de maintien (6).

7. Raccord de tuyau selon l'une des revendications 1 à 6 **caractérisé en ce que** la bague de maintien (6) présente une résistance plus élevée que l'élément de tuyau, que le corps de vissage (1) et que l'écrou-raccord (2).

8. Raccord de tuyau selon la revendication 7 **caractérisé en ce que** la résistance plus élevée de la bague de maintien (6) s' obtient par traitement thermique.

9. Raccord de tuyau selon l'une des revendications 1 à 8 **caractérisé en ce qu'**une surface frontale (22) de la pièce d'extrémité (23), parallèle à l'axe, du tuyau (3) moulé forme, avec le fond d'assise (21) du corps de vissage (1), après montage du raccord, une surface de contact.

10. Raccord de tuyau selon l'une des revendications 1 à 8 **caractérisé en ce que** la surface frontale (22) de la pièce d'extrémité (23), parallèle à l'axe, du tuyau ( 3) moulé présente un renflement annulaire (24) fermé, lequel occupe une fraction de la surface frontale (22) et forme, après montage du raccord de tuyau, avec le fond d'assise (21) du corps de vissage (1), un joint d'étanchéité métallique.

11. Raccord de tuyau selon l'une des revendications 1 à 10 **caractérisé en ce que** le renflement (7) du tuyau ( 3) moulé est prolongé par une douille d'appui, laquelle est bloquée par l'écrou-raccord (2) contre le tuyau (3).
